# EUROPEAN PATENT SPECIFICATION

(11) **EP 1 481 871 B1**
(45) Date of publication and mention of the grant of the patent: **17.10.2007**
(21) Application number: 02787979.0
(22) Date of filing: 21.11.2002
(51) Int. Cl.: B62B 9/00

(54) **AUXILIARY DEVICE THAT FACILITATES THE MOVEMENT OF STANDARD PUSHCHAIRS OVER SANDY OR SIMILAR SURFACES**
HILFSVORRICHTUNG, DIE DIE BEWEGUNG VON STANDARDKINDERWAGEN ÜBER SANDIGE ODER ÄHNLICHE FLÄCHEN ERLEICHTERT
DISPOSITIF AUXILIAIRE FACILITANT LE DEPLACEMENT DE POUSSETTES CLASSIQUES SUR DES SURFACES SABLONNEUSES OU ANALOGUES

(30) Priority: 22.11.2001 ES 200102942 U
(43) Date of publication of application: 01.12.2004
(73) Proprietor: Clement Jurado, Vicente, 46006 Valencia (ES)
(72) Inventor: Clement Jurado, Vicente, 46006 Valencia (ES)
(74) Representative: Maldonado Jordan, Julia
(86) International application number: PCT/ES2002/000550
(87) International publication number: WO 2003/043868

(56) References cited:
- DE-A- 4 443 650
- FR-A- 2 663 285
- GB-A- 386 987
- US-A- 5 056 805
- US-A- 5 593 174
- US-A- 6 059 301

## Description

### OBJECT OF THE INVENTION

The present specification relates to an application for an invention corresponding to an auxiliary arrangement for facilitating the movement of standard child strollers and carriages on sandy surfaces or the like, the purpose of which lies on being configured as an element of reduced volume which is detachably incorporated in the inner area of the four wheels of the carriage or the stroller, or on the inner area of the two rear wheels, either directly or with the collaboration of a coupler, resulting in a substantial increase of the rolling area configured by two parts joined to the inner area of the wheels, each one of the two parts adopting an approximately cone frustum shape, which allows for them to be embedded in one another or for one to be introduced inside the other one at the area of lesser diameter when they are not used, having an outer surface close to a cylinder, regardless of whether or not it is faceted, or the outer area is provided with slight projections for facilitating the movement of the stroller or carriage to which it is adapted.

The invention has provided for the use of an additional handle provided with telescopic means for the extension of its length, which is fixed to the structure of the standard child stroller or carriage in a detachable manner at two points situated in the area comprised between the front wheels and the lower part of the seat or portacrib of the child, and it has even provided for the incorporation of an alternative handle which is positioned also in a detachable manner between the parts constituting the grips of the standard child stroller or carriage.

### FIELD OF THE INVENTION

This invention as defined in claim 1 and in the dependent claims has its application within the industry dedicated to the manufacture of child carriages and strollers.

### BACKGROUND OF THE INVENTION

The applicant has knowledge of the existence of all-terrain baby carriages, as well as other ones equipped with caterpillar tracks or on skates or skies, facilitating the movement on irregular surfaces, such as shown by DE 4443 650 A1.

However, it has been confirmed that for the movement of child carriages or strollers, it would be desirable to have auxiliary elements of a small volume when they are not installed, and easily detachable, which are capable of being incorporated on standard child carriages in the case of necessity, allowing the rolling on sandy, gravelly or similar terrains and which, even when installed, do not at all hinder the rolling on hard surfaces, these elements being furthermore able to be removed once the area of difficult movement has been overcome.

However, the applicant does not have knowledge of the current existence of an invention having the features previously indicated as suitable.

### DESCRIPTION OF THE INVENTION

The auxiliary arrangement for facilitating the movement of standard child strollers and carriages on sandy surfaces or the like proposed by the invention is configured as an evident novelty which, according to its easily detachable nature, allows for the child carriage or stroller in which it is incorporated to move on a hard surface, such as asphalt or the like, and at the same time, the movement of the child carriage or stroller on sand by means of the use of the invention, having an easy placement on the inner area of the coupling points of the wheels or wheel assembly of the child stroller or carriage.

More specifically, the auxiliary arrangement for facilitating the movement of standard child strollers and carriages on sandy surfaces or the like is constituted from several rolling members which will preferably be incorporated in the inner area of the front and rear wheels or wheel assemblies, or only on the rear wheel assembly, likewise having an additional front or rear traction handle, all this depending on the type of stroller or carriage.

The rolling members are configured as easily detachable elements which are capable of being installed on the rolling assemblies of the carriage, consequently allowing for a simplified movement thereof on the sand, and at the same time they do not at all hinder the operation of the member where they are incorporated when the latter moves on a hard surface.

The rolling members configured as detachable elements are preferably carried out as hollow parts of a basically cylindrical geometry, although in their general shape they adopt an approximately cone frustum shape, situated between the rolling points existing at each end of a rolling assembly and coaxially positioned with regard to said rolling assembly. Although it is not ideal, the frustoconical bodies could also be situated on the outer part of the rolling points.

The maximum diameter of the frustoconical bodies is slightly less than that of the rolling points, whereby said bodies do not make contact with the ground when the carriage or stroller is situated on a hard surface, and therefore they never interfere in the movement of the carriage over the terrain on which they are incorporated, with the additional particularity that given the conicalness of the frustoconical bodies, some of the latter can be fitted inside the other ones when they are not assembled on the wheels. Optionally the frustoconical bodies can be dimensioned such that they allow for the folding of the child carriage or stroller even when they are installed.

However, when the carriage or stroller is situated on a sandy surface, the conventionally-installed wheels constituting the carriage, configured as two pairs of wheels on each one of the ends of the structure configuring a multiple rolling assembly, or on the contrary, constituted of a single wheel on each one of the ends of the structure, slightly sink, and the stroller or carriage therefore rests on the additional bodies, i.e. on the semi-cylinders or frustoconical bodies, which according to their shape, prevent the carriage or stroller from sinking due to the considerable increase of the rolling surface which these elements constituting the rolling supports generate, allowing for easy movement of the carriage or stroller.

The invention also incorporates means for the detachable coupling of the semi-cylindrical or frustoconical bodies with the carriage or stroller, without resorting to the use of tools and in a much reduced time.

The traction handle is intended for being used as an optional and detachable element preventing the problem of the increased sinking of the rolling assemblies of the carriage when the latter is pushed from the rear part thereof, the handle having the purpose of easily dragging the carriage or stroller while the latter rests in a balanced manner on the two elements constituting the cylinders or practically-frustoconical bodies situated in the front and rear areas, the handle in question being able to be placed in a position when it is not to be used that does not at all hinder the usual operation of the carriage, inside of which the transport of the child is carried out.

The detachable joints between the handle and the structure of the carriage will allow for said handle to remain solidly locked in suitable positions (dragging position and resting position) without the handles being able to be accidentally removed or moved therefrom, the handle being able to be lowered from the dragging position to the resting position and vice versa when the user releases safety stops.

It must be indicated that, according to the length of the bars constituting the handle, the latter should be able to be regulated such that the handle be approximately at the height of the hand of the person who will carry out the traction or dragging of the carriage when said person places his or her arm extended in approximately the same angle of the handle in the dragging position, and thus it is achieved that the force usually exerted by the person has approximately the same direction of the handle thus constituted.

The position of the joints of the handle with the structure of the carriage, and for the purpose of achieving that said carriage has a tendency to carry out the forward movement in a balanced manner on the two cylinders or frustoconical bodies, to minimize the tendency to tip forwards or backwards in the direction of the motion, must be respected at all times, it being necessary to indicate that the position of the joints between the handle and the structure must comply with the suitable conditions as mentioned below. Namely:
- The joints between the handle and the structure of the carriage will be situated such that an imaginary extension of the handle in the dragging position passes under the area where the center of gravity of the assembly formed by the carriage and the transported child can be located, logically according to the weight of the transported child.
- Likewise, it must be indicated that the position of the joints between the handle and the structure of the carriage must be such that when the carriage is placed empty and the front wheels are completely blocked, the application of a force of a value exceeding the traction force in the direction of the handle in the dragging position and in the traction direction does not cause the lifting of the rear wheels of the carriage.
- The position of the joints should not too closely approach the end of the legs close to the front wheels, in order to minimize the tendency of the vehicle to tip backwards.

The special configuration of the handle and of its the joints to the structure of the stroller allows that, providing a standard child stroller only with said handle, the child stroller can be stably dragged on the sand, although a force exceeding that necessary for dragging the same stroller when it additionally incorporates rolling members or frustoconical bodies being necessary.

With regard to the stiffening member, it must be indicated that the invention can optionally incorporate a stiffening member which can be installed to join together the two semi-cylinders placed at the two rolling points of the invention, this embodiment having the function of stiffening or joining together the two semi-cylinders, preventing such a momentum from being transmitted to the rolling point which tends to cause the rotational axis of the wheels to lose orthogonality with the axis of the leg on which they are fixed.

The stiffening member can be carried out either as a stiffening ring arranged according to longitudinal support points generating the locking of the elements projecting from the ring with suitable areas in the body situated in the opposite area, or alternatively, as threading or bayonet-type locking means achieving the joining of the two semi-cylinders for the object of solidly fixing them. The maximum diameter of the stiffening ring is somewhat less than the outer diameter of the wheels.

The invention allows for the incorporation of the cylinder placed in each one of the rolling points plus the incorporation of the previously described handle, allowing for the fact that the adult extends the handle in the normal motion direction and the carriage or stroller moves forward in a normal direction, supported on both cylinders in a balanced manner.

The invention can also be placed only in the area corresponding to the rear rolling assembly, a detachable handle different from the one previously described being incorporated, when necessary, between the two grips normally used for pushing, which allows extending the carriage in a centered manner in the direction opposite to the normal motion direction, the stroller resting solely and exclusively on the frustoconical bodies situated on the rear assembly, and the stroller therefore moving forward in the direction opposite to the direction usually established for motion.

It must obviously be indicated that the use of strollers provided with this invention must be restricted to flat beach areas without excessive slopes, which may cause the carriage to tip over.

Given that the wheels of some child carriages can rotate about the vertical axis of the corresponding leg, orienting themselves automatically in the direction of the motion, there is a gap between the two inner sides of both frustoconical bodies such that when the frustoconical bodies are not joined by the optional stiffening ring, it prevents said frustoconical bodies from hitting against one another when the wheels rotate about the corresponding vertical axis, orienting themselves automatically in the direction of the motion.

The possibility that the wheels can automatically orient themselves, combined with the fact that if the frustoconical bodies are not joined by means of the stiffening member, the corresponding wheels can rotate at a different angular speed, ensures optimal turning capacity for the carriage.

### DESCRIPTION OF THE DRAWINGS

To complement the description being made and for the purpose of helping to better understand the features of the invention, a set of drawings is attached to the present specification as an integral part thereof, wherein the following has been shown with an illustrative and non-limiting character:
Figure 1 shows a perspective view of the frustoconical bodies used for the configuration of the invention relative to an auxiliary device for facilitating the movement of child strollers and carriages on sandy surfaces or the like, wherein the end of the coupling body situated in the inner area of the wheels, as well as the two parts acting as elements constituting the arrangement itself, can also be seen.
Figure 2 shows a front elevational view of the object shown in Figure 1, wherein it can be seen how the studs projecting from the optional annular body surrounding one of the parts fixed to the inner side of the movement assembly of the carriage is joined to the part situated in the opposite area.
Figure 3 shows a front elevational view of the object shown in Figure 2, wherein it can be seen that the joining between the bodies constituting the arrangement is carried out by cramping or a similar configuration by means of an annular member.
Figure 4 shows a perspective view of a child carriage in which the rolling members of the invention have been incorporated in the part corresponding to the rolling areas and situated in the inner area thereof, and the carriage is provided with a traction handle for facilitating its movement on sandy terrains.
Figure 5 shows a perspective view of the coupling, which can be carried out on the inner area of the wheels or movement assembly of a child carriage or stroller to facilitate the incorporation of the invention.
Figure 6 shows a view of the alternative handle which can be placed between the two handles usually used for pushing.
Figure 7 shows a view of the object shown in Figure 4 when movement of the child stroller is carried out.
Figure 8 lastly shows a view of the invention when the traction on the handle shown in Figure 6 is carried out in a direction opposite to the one shown in Figure 7, incorporating the rolling members in correspondence with the rear wheels and in their inner area.

### PREFERRED EMBODIMENT OF THE INVENTION

In view of these figures, in can be seen how the auxiliary arrangement for facilitating the movement of child strollers and carriages on sandy surfaces or the like is constituted from two bodies shaped as cylindrical members (11) and (11') having thickening areas (12) on their surface, or incorporating polyfaceted surfaces, both bodies (11) and (11') adopting a general, slightly frustoconical shape, which are referenced as a whole with reference (10).

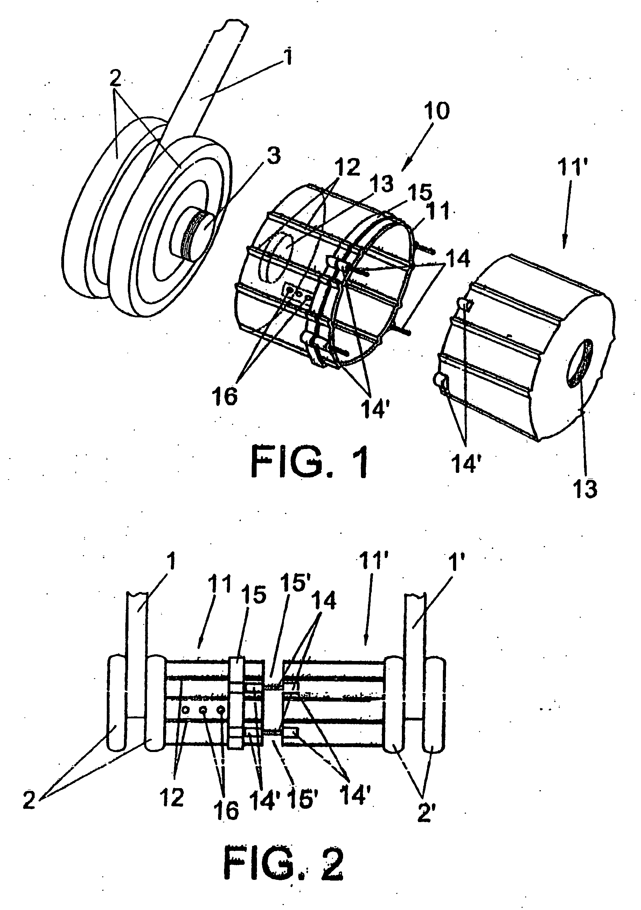

As can be seen in Figure 1, the bodies (11) and (11'), polyfaceted on their surface or provided with longitudinal thickenings (12), incorporate threaded perforations (13) for the coupling of the bodies (11) and (11') on a threaded projection (3) emerging from the inner side of the wheels (2) constituting the wheel assembly or movement assembly for a child carriage or stroller, which are fixed to a support structure (1) configured as a frame, the bodies (11) and (11') having a suitable feature for the purpose of achieving that their movement on a sandy surface can be carried out without any problems whatsoever, even though the wheels (2) are incorporated or introduced on the terrain. The frustoconical bodies can optionally be dimensioned such that they allow for the folding of the child carriage or stroller even when they are installed.

The part (11) can incorporate an annular member (15) from which longitudinally projecting rods originate, passing through the turrets (14') of the body (11), intended for being introduced in projections or turrets (14') situated on the perimeter of part (11'), achieving that these studs, projections or the like (14) fix or join parts (11) and (11') by moving the annular part (15), which will be enhanced with the actuation of the retaining members (16) which, by being moved in a downwards direction against a resilient strip, achieve that the annular part (15) moves from one position to another, and at the same time is retained in the desired position for its joining or introduction of the rods (14) inside the areas (14').

Figure 2 shows the gap (15') which allows that if the two frustoconical bodies are not joined by means of the stiffening ring (15), the wheels (2) and (2') can rotate about the vertical axes of the legs (1) and (1'), orienting themselves automatically in the direction of the motion.

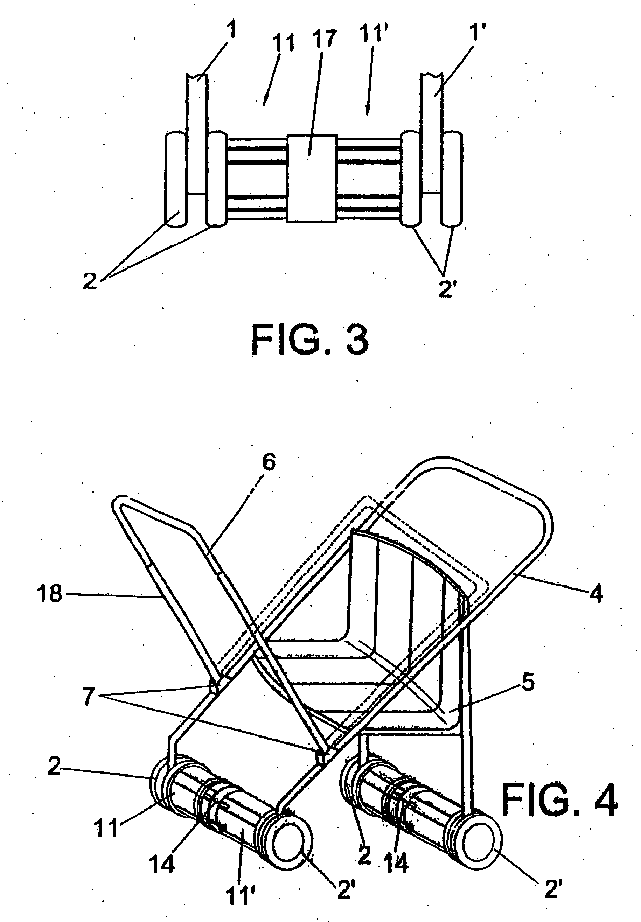

Moving to Figure 3, it is observed how the invention can incorporate an annular member (17), which will act as a joining link of parts (11) and (11'), internally incorporating a bayonet-type fixing member or the like, achieving, as the rods (14), the joining of part (11) with part (11').

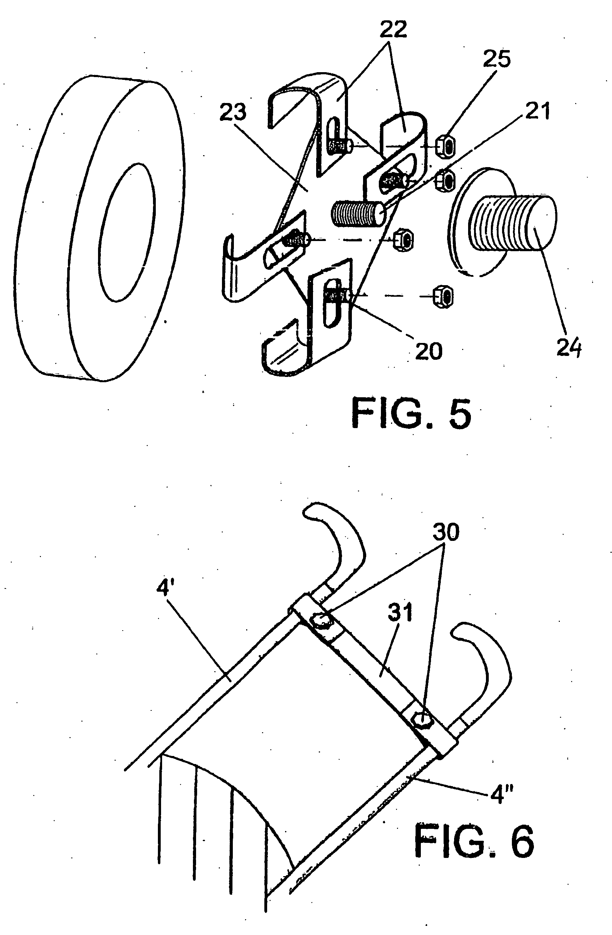

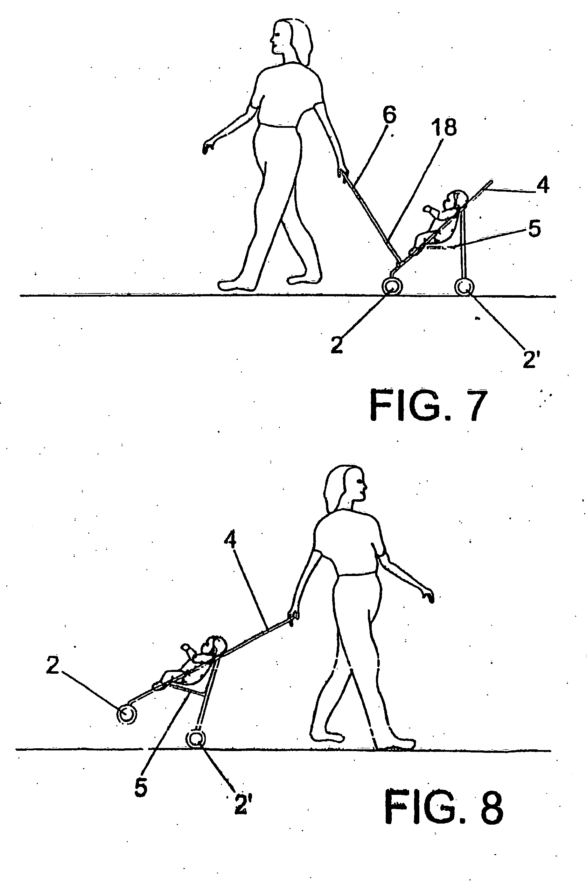

In Figure 4, it can be observed how the invention has a complementary traction handle which is fixed in an articulated and detachable manner in retention means (7) also detachably fixed on the structure (4) of the carriage having telescopic means (18) for the folding and perfect alignment of the traction member or complementary handle (6) in dragging position as it is aligned with the arm of the person who is carrying out the movement of the stroller, as shown in Figure 7. Figure 4 also shows, in dotted lines, the resting position to which the handle (6) can be lowered when it is not used.

Figure 5 shows a coupling which can be placed on the wheels (2), and specifically on the inner side of the inner wheel in the event that said wheel is not provided from the factory with the emerging projection (3), for which several parts (22) have been provided which are fixed by means of studs (20) and with the collaboration of nuts (25) on a part (23) which can adopt any shape, having a central threaded rod (21) on which the coupling of a part (24) is carried out, which part has the purpose of acting as the externally threaded projection (3) emerging in a conventional manner and positioned in the factory as shown in Figure 1, likewise achieving the fixing of the parts (11) and (11') constituting the arrangement (10) shown in detail in Figures 1, 2 and 3.

Although not optimal from the point of view of the required traction force, the invention has provided for the fixing of a detachable handle (31), shown in Figure 6, by means of conventional means (30) facilitating the coupling of the handle (31) so that once the arrangement has been located in the inner part of the rear wheels of the stroller, it can be moved as shown in Figure 8.

In short, the invention is prepared for being located both in the two inner or outer areas of the movement assemblies of a child carriage and in the inner or outer area, being implemented with the traction handle shown in Figure 4 and having reference number (6), which has telescopic means for being adapted in the traction line with the upper limb of the person who is carrying out the movement effort of the stroller, or with the alternative handle (31) shown in Figure 6.

The materials, shape, size and position of the elements will be susceptible to variation as long as that does not assume a change in the essentiality of the invention. The terms of the present specification must be taken in a broad and non-limiting sense.

## Claims

1. An auxiliary arrangement for facilitating the movement of standard child strollers and carriages on sandy surfaces or the like, intended for carrying out the increase of the rolling surface of child carriages or strollers, being able to be incorporated both in the inner area and in the outer area of the wheels and coaxially therewith, the arrangement (10) **characterized by** being constituted of two bodies (11, 11') manufactured from a stiff material adopting the nearly frustum cone shape with few degrees of aperture, its outer surface being polyfaceted or provided with longitudinal projections (12), incorporating means (13) for their fixing to a cylindrical projection (3), situated on the axis of the wheels, having retention means for the bodies (11, 11'), first body (11)optionally having an annular body (15) on its surface provided with projections bearing studs, protrusions or the like (14), which are introduced in retention turrets (14') situated close to the opening of the second body (11'), positioned in its outer area, joining the two bodies (11, 11'), the bodies (11, 11') being internally hollow, the first body (11) also being able to incorporate an alignment of constituent elements (16) as retaining and releasing members of annular body (15) moving on the outer surface of the first body (11), which can be replaced with a first part (17) which, provided with conventional clipping means inside of it, likewise solidly fixes the bodies (11, 11'), which can be fixed on the inner sides of the wheel assemblies (2, 2'), joined to the structure of the carriage by means of support rods (1, 1').

2. An auxiliary arrangement for facilitating the movement of standard child strollers and carriages on sandy surfaces or the like according to claim 1, **characterized in that** it incorporates a detachable complementary accessory consisting of an additional height-adjustable handle (6), foldable, collapsible and fixable to the structure of the stroller by means of detachable retention members (7) which can be placed in the area situated between the front wheels and the lower part of the seat or portacrib of the child.

3. An auxiliary arrangement for facilitating the movement of standard child strollers and carriages on sandy surfaces or the like according to the previous claims, **characterized by** having a coupling part (23) which can be attached to the inner surface of the wheels of the child carriage or stroller, having several threaded studs (20) which are introduced in parts second (22) which can be coupled in the wheels, coupling part (23) having a central lug (21) on which a third part (24) is incorporated for its fixing to the two bodies (11, 11') through perforations (13), the second parts (22) being retained on coupling part (23) by means of nuts (25).

4. An auxiliary arrangement for facilitating the movement of standard child strollers and carriages on sandy surfaces or the like according to the previous claims, **characterized by** incorporating an optional handle (31) mountable transversally positioned between the pushing parts (4, 4') of a foldable stroller or carriage, provided with quick fixing members (30).

5. A stroller comprising an auxiliary arrangement for facilitating the movement of standard child strollers and carriages on sandy surfaces or the like according to the previous claims, **characterized in that** the maximum diameter of the annular body (15) and that of the frustoconical bodies (11, 11') are slightly less than the outer diameter of the wheels (2, 2'), at least one gap (15') existing between the two closest sides of the frustoconical bodies allowing the wheels on which they are installed to rotate freely about a vertical axis if the frustoconical bodies are not joined together.

## Patentansprüche

1. Zusatzanordnung zur Erleichterung der Fortbewegung von herkömmlichen Kinderwagen oder Buggies auf sandigen oder ähnlichen Oberflächen, die um die Rollfläche der Kinderwagen oder Buggies zu erhöhen vorgesehen ist, wobei sie sowohl im inneren Bereich als auch im äußeren Bereich der Räder und koaxial zu diesen eingebaut werden kann, wobei die Anordnung (10) **dadurch gekennzeichnet ist, dass** sie aus zwei Körper (11, 11') besteht, die aus einem steifem Material hergestellt sind und die eine in etwa stumpfkegelförmige Form mit einem kleinen Öffnungswinkel annehmen, wobei ihre äußere Oberfläche aus mehreren Flächen besteht oder mit Längsansätzen (12) ausgestattet ist, die Mittel (13) zu ihrer Befestigung an einem zylindrischen Ansatz (3) aufweisen, der an der Achse der Räder positioniert ist und der Haltemittel für die Körper (11, 11') aufweist, wobei der erste Körper (11) wahlweise einen ringförmigen Körper (15) aufweist, der auf seiner Oberflächen mit Bolzen, Vorsprünge (14) oder Ähnliches aufweisenden Ansätzen versehen ist, die in Haltetürme (14') eingeführt werden, die in ihrem äußeren Bereich positioniert nahe der Öffnung des zweiten Körpers (11') liegen, wobei die zwei Körper (11, 11') verbunden werden, wobei die Körper (11, 11') im Inneren hohl sind, wobei der erste Körper (11) auch eine Reihe von Komponenten (16) als sich auf der äußeren Oberfläche des ersten Körpers (11) bewegende Halte- und Lösemittel des ringförmigen Körpers (15)aufweisen kann, Reihe die durch einen ersten in seinem Inneren mit herkömmlichen Klippverbindungen versehenen Teil (17) ersetzt werden kann, der ebenfalls fest die Körper (11, 11') fixiert, die an den inneren Seiten der Räderanordnung (2, 2') fixiert werden können und die durch Stützstangen (1, 1') mit der Struktur des Wagens verbunden sind.

2. Zusatzanordnung zur Erleichterung der Fortbewegung von herkömmlichen Kinderwagen oder Buggies auf sandigen oder ähnlichen Oberflächen gemäß Anspruch 1, **dadurch gekennzeichnet, dass** sie ein lösbares ergänzendes Zubehörteil aufweist, das aus einem zusätzlichen höhenverstellbaren faltbaren zusammenklappbaren Handgriff (6) besteht, der an der Wagenstruktur durch lösbare am zwischen den vorderen Rädern und dem unteren Teil des Sitzes oder Reisebettes des Kindes befindlichen Bereich platzierbare Haltemittel (7) fixiert werden kann.

3. Zusatzanordnung zur Erleichterung der Fortbewegung von herkömmlichen Kinderwagen oder Buggies auf sandigen oder ähnlichen Oberflächen gemäß der vorherigen Ansprüche, **dadurch gekennzeichnet, dass** sie ein Kopplungsteil (23) aufweist, das an der inneren Oberfläche der Räder des Kinderwagens bzw. Buggies befestigt werden kann, das mehrere Gewindebolzen (20) aufweist, die in zweite Teile (22) eingeführt sind, die an die Rädern angekoppelt werden können, wobei der Kopplungsteil (23) einen zentralen einen dritten Teil (24) aufweisenden Stift (21) aufweist, der für seine Befestigung durch Bohrungen (13) an den beiden Körper (11, 11'), wobei die zweiten Teile (22) im Kopplungsteil (23) durch Gewindemuttern (25) festgehalten werden.

4. Zusatzanordnung zur Erleichterung der Fortbewegung von herkömmlichen Kinderwagen oder Buggies auf sandigen oder ähnlichen Oberflächen gemäß den vorherigen Ansprüchen, **dadurch gekennzeichnet, dass** sie einen optionalen mit Schnellverschlüssen (30) versehenen Griff (31) aufweist, der quer zwischen den Schubteilen (4, 4') eines faltbaren Kinderwagens montiert werden kann.

5. Kinderwagen, der eine Zusatzanordnung zur Erleichterung der Fortbewegung von herkömmlichen Kinderwagen oder Buggies auf sandigen oder ähnlichen Oberflächen gemäß den vorherigen Ansprüchen umfasst, **dadurch gekennzeichnet, dass** der maximale Durchmesser des ringförmigen Körpers (15) und der stumpfkegelförmigen Körper (11, 11') geringfügig kleiner sind als der äußere Durchmesser der Räder (2, 2'), wobei mindestens ein Spalt (15') zwischen den beiden nahesten Seiten der stumpfkegelförmigen Körper vorhanden ist, der, wenn die stumpfkegelförmigen Körper nicht untereinander verbunden sind, die Rädern, an denen die Körper installiert sind, frei um eine vertikale Achse drehen lässt.

## Revendications

1. Disposition auxiliaire pour faciliter le mouvement de poussettes et de chariots pour enfants conventionnels sur des surfaces sablonneuses ou similaires, prévue pour produire une augmentation de la surface de roulement des chariots et des poussettes pour enfants, en pouvant s'incorporer aussi bien sur la zone intérieure que sur la zone extérieure des roues et coaxialement à celles-ci, la disposition (10)étant **caractérisée par** sa constitution en deux corps (11, 11') fabriqués en une matière rigide qui adopte une forme presque tronconique avec peu de degrés d'ouverture, sa surface extérieure ayant de multiples faces ou étant pourvue d'épaulements (12) longitudinaux, incorporant des moyens (13) pour sa fixation à un épaulement (3) cylindrique, situé dans l'axe des roues, ayant des moyens de retenue pour les corps (11, 11'), le premier corps (11) ayant optionnellement un corps (15) annulaire sur sa surface pourvu d'épaulements portant des boulons, protubérances ou similaires (14), qui s'introduisent dans des tourelles (14') de retenue situées proches de l'ouverture du deuxième corps (11'), située dans sa zone extérieur, en unissant les deux corps (11, 11'), les corps (11, 11') étant creux à l'intérieur, le premier corps (11) pouvant également incorporer un alignement d'éléments (16) constitutifs tel que d'éléments de retenue et de libération du corps (15) annulaire qui se déplacent sur la surface extérieure du premier corps (11), qui peuvent être remplacés par une première partie (17) qui, pourvue de moyens d'accrochage à pression conventionnels en son intérieur, fixe également fermement les corps (11, 11') pouvant se fixer sur les côtés intérieurs des ensembles (2, 2') de roue, unis à la structure du chariot au moyen de tringles (1, 1') de support.

2. Disposition auxiliaire pour faciliter le mouvement de poussettes et de chariots pour enfants conventionnels sur des surfaces sablonneuses ou similaires selon la revendication 1, **caractérisée en ce qu'**elle incorpore un accessoire complémentaire séparable consistant en une poignée (6) additionnelle ajustable en hauteur, pliante, rabattable et pouvant se fixer à la structure de la poussette au moyen d'éléments (7) de retenue séparables qui peuvent se placer sur la zone située entre les roues avant et la partie inférieure du siège o nacelle de l'enfant.

3. Disposition auxiliaire pour faciliter le mouvement de poussettes et de chariots pour enfants conventionnels sur des surfaces sablonneuses ou similaires selon les revendications précédentes, **caractérisée en ce qu'**elle a une partie (23) de couplement pouvant se fixer à la surface intérieure des roues du chariot ou de la poussette pour enfants, ayant divers boulons (20) vissés qui s'introduisent dans des deuxièmes parties (22) pouvant se coupler aux roues, la partie (23) de couplement ayant un téton (21) central sur lequel s'incorpore une troisième partie (24) pour sa fixation aux deux corps (11, 11') à travers des perforations (13), les deuxièmes parties (22) étant retenues sur la partie (23) de couplement au moyen d'écrous (25).

4. Disposition auxiliaire pour faciliter le mouvement de poussettes et de chariots pour enfants conventionnels sur des surfaces sablonneuses ou similaires selon les revendications précédentes, **caractérisée par** l'incorporation d'une poignée (31) optionnelle pouvant se monter en position transversale entre les parties (4, 4') de poussée d'un chariot ou poussette pliant, pourvue d'éléments (30) de fixation rapide.

5. Poussette comprenant une disposition auxiliaire pour faciliter le mouvement de poussettes et de chariots pour enfants conventionnels sur des surfaces sablonneuses ou similaires selon les revendications précédentes, **caractérisée en ce que** le diamètre maximal du corps (15) annulaire et celui des corps (11, 11') tronconiques sont légèrement inférieurs au diamètre extérieur des roues (2, 2'), en ayant au moins un espace (15') entre les deux côtés les plus proches des corps tronconiques qui permet que les roues sur lesquelles ils sont installés tournent librement autour d'un axe vertical si les corps tronconiques ne sont pas unis entre eux.
